# EUROPÄISCHE PATENTSCHRIFT

(11) **EP 1 291 475 B1**
(45) Veröffentlichungstag und Bekanntmachung des Hinweises auf die Patenterteilung: **12.06.2013**
(21) Anmeldenummer: 02018040.2
(22) Anmeldetag: 13.08.2002
(51) Int. Cl.: E04C 2/04, F28D 20/02

(54) **Bauplatte auf der Basis von Gips und Verfahren zur Herstellung derselben**
Plaster based board and method of production
Panneau à base de plâtre et méthode de fabrication

(30) Priorität: 06.09.2001 DE 10143612
(43) Veröffentlichungstag der Anmeldung: 12.03.2003
(73) Patentinhaber: Knauf Gips KG, 97346 Iphofen (DE)
(72) Erfinder: Hummel, Hans-Ulrich, Prof. Dr., 97346 Iphofen (DE); Stich, Dietmar, 97348 Willanzheim (DE)
(74) Vertreter: von Kreisler Selting Werner

(56) Entgegenhaltungen:
- EP-A- 0 216 497
- EP-A1- 0 427 063
- EP-A1- 0 503 383
- EP-A2- 0 755 903
- WO-A1-03/016650
- DE-A1- 19 954 769
- US-B1- 6 200 681

## Beschreibung

Bauplatten auf der Basis von Gips sind beispielsweise Gipskartonplatten oder Gipsfaserplatten. Diese Platten haben sich in der Praxis bewährt, besitzen aber gegenüber dickem Mauerwerk deutlich geringere Wärmespeicherkapazität, da sie im Allgemeinen wesentlich dünner ausgestaltet sind und demzufolge auch eine geringere Gesamtmasse besitzen.

WO 03/016650, Stand der Technik nach Art. 54(3) EPÜ, beschreibt die Verwendung von Mikrokapseln in Gipskartonplatten.

DE 197 49 731 beschreibt Mikrokapseln als Latentwärmespeicher für Formkörper und Beschichtungsmassen.

Die Erfindung hat sich die Aufgabe gestellt, Bauplatten auf der Basis von Gips zu entwickeln, die bei sonst vergleichbaren technischen Eigenschaften wie die bisher bekannten Bauplatten eine erhöhte Wärmespeicherkapazität aufweisen. Diese Aufgabe wird gelöst durch eine Bauplatte auf der Basis von Gips mit latenter Wärmespeicherkapazität, die aus einem abgebundenen Gipskern besteht und in seinem Kern bis zu 50 Gew.-% mikroverkapselte Paraffine mit Kapselgrößen von 10 bis 200 µm enthält und beidseitig ein Glasfaservlies aufweist. Mikroverkapselte Paraffine besitzen eine Wärmespeicherkapazität von 80 - 200 J/g. Sie werden von diversen Herstellern in Kapselgrößen bis zu 300 µm geliefert. Für die erfindungsgemäße Bauplatte ist jedoch eine Kapselgröße im Bereich zwischen 10 und 200 µm geeignet. Je größer die Kapsel ist, d.h. je mehr Latentwärmespeicher darin enthalten ist, um so höher ist die Wärmespeicherkapazität pro Gewichtseinheit, jedoch besitzen die großen Kapseln einen stärkeren Auftrieb in der mit Wasser angerührten Gipsmasse, so dass die Tendenz zur Entmischung besteht. Diese Entmischung kann insbesondere zu Störungen und Inhomogenitäten bei der Herstellung der Bauplatten auf den üblichen Bandstraßen für Gipsplatten führen.

Erfindungswesentlich ist weiterhin die Maßnahme, dass die Bauplatte beidseitig ein Glasfaservlies aufweist, da der abbindefähige Gipsbrei gemischt mit den mikroverkapselten Paraffinen bei Verwendung von Karton zu einer unzureichenden Haftung führt. Überraschenderweise ist es hingegen möglich, durch Verwendung von Glasfaservlies Bauplatten herzustellen, die eine ausreichende Haftung zwischen dem Gipskem und der Abdeckung aufweisen.

Erstaunlicherweise ist es sogar möglich, bei der Herstellung der erfindungsgemäßen Bauplatten nach dem Abbinden auf der Bandstraße bei Kerntemperaturen bis zu 100 °C zu trocknen, obwohl die mikroverkapselten Paraffine für sich alleine bereits bei Temperaturen deutlich unter 100 °C zerplatzen und unbrauchbar werden. Der Wechsel zwischen der festen und der flüssigen Phase der Paraffine findet je nach Art der verwendeten Paraffine im Bereich zwischen 10 und 35 °C statt. Mikroverkapselte Paraffine werden daher normalerweise nur Temperaturen bis circa 60 °C ausgesetzt, keinesfalls jedoch Temperaturen bis 100 °C oder mehr. Eine nachträgliche Erklärung, wieso es bei der Herstellung der erfindungsgemäßen Bauplatten möglich ist, dennoch bei Temperaturen bis zu 100 °C zu trocknen, könnte sein, dass die Mikrokapseln von dem abgebundenen Gips derartig fest umgeben sind, dass sich die Kapselfüllung und insbesondere die Kapselhüllen nicht den höheren Temperaturen entsprechend ausdehnen können und dabei zerstört werden. Um diesen Effekt zu verstärken, wird vorzugsweise ein abbindefähiger Gipsbrei eingesetzt, dem keine Porenbildner zugesetzt werden.

## Patentansprüche

1. Bauplatte auf der Basis von Gips mit latenter Wärmespeicherkapazität bestehend aus einem abgebundenen Gipskern, welcher beidseitig ein Glasfaservlies aufweist und in seinem Kern bis zu 50 Gew.-% mikroverkapselte Paraffine mit Kapselgrößen von 10 bis 200 µm aufweist.

2. Verfahren zur Herstellung von Bauplatten gemäß Anspruch 1, **dadurch gekennzeichnet, dass** mikroverkapselte Paraffine mit Korngrößen der Kapseln von 10 bis 200 µm mit einem abbindefähigen Gipsbrei vermischt auf einer Bandstrasse für Gipsplatten auf ein Glasfaservlies aufgetragen, mit einem weiteren Glasfaservlies abgedeckt und nach dem Abbinden auf der Bandstrasse geschnitten und bei Temperaturen bis zu 100°C getrocknet werden.

## Claims

1. A gypsum-based construction plate with latent heat storage capacity, consisting of a set plaster core having a glass fiber mat on both sides thereof, and having up to 50% by weight of microencapsulated paraffins with capsule sizes of from 10 to 200 µm in the core thereof.

2. A process for preparing construction plates according to claim 1, **characterized in that** microencapsulated paraffins with grain sizes of the capsule of from 10 to 200 µm are mixed with a settable gypsum slurry, the slurry is applied to a glass fiber mat on a conveyor belt for gypsum plates, covered by another glass fiber mat, and after setting, is cut on said conveyor belt, and dried at temperatures of up to 100 °C.

## Revendications

1. Panneau de construction à base de plâtre, ledit panneau ayant une capacité à emmagasiner de la chaleur latente et étant constitué d'un noyau de plâtre solidifié qui possède des deux côtés une nappe de fibres de verre et à l'intérieur de son noyau jusqu'à 50% en poids de paraffines micro-encapsulées d'une granularité allant de 10 à 200 µm.

2. Procédé de fabrication de panneaux de construction selon la revendication 1, **caractérisé en ce que** des paraffines micro-encapsulées dont les capsules ont une granularité allant de 10 à 200 µm sont étalées sur une nappe de fibres de verre sur une bande pour panneaux de plâtre en étant mélangées à une pâte de plâtre apte à se solidifier, sont recouvertes d'autre nappe de fibres de verre et sont découpées après solidification sur la bande et séchées à des températures allant jusqu'à 100°C.
